# EUROPEAN PATENT SPECIFICATION

(11) **EP 1 911 605 B1**
(45) Date of publication and mention of the grant of the patent: **07.04.2010**
(21) Application number: 07075849.5
(22) Date of filing: 28.09.2007
(51) Int. Cl.: B60B 35/04, B60B 35/08, B60G 9/00

(54) **Axle body for a wheel axle**
Achskörper für eine Radachse
Corps d'essieu pour un axe de roue

(30) Priority: 02.10.2006 NL 1032607
(43) Date of publication of application: 16.04.2008
(73) Proprietor: Weweler Nederland B.V., 7332 AP Apeldoorn (NL)
(72) Inventor: Bramer, Hans, 6961 WR Eerbeek (NL)
(74) Representative: Houben, Christiaan Hein Willem Frans

(56) References cited:
- EP-A- 0 854 057
- WO-A-2006/067551
- WO-A-2006/096573
- FR-A1- 2 805 776

## Description

The invention relates to an axle body according to the preamble of claim 1.

Such an axle body is known, for example from WO 91/17898. The known axle body has end portions which are in line and is curved downwards near the end portions. The centre of the axle lies lower down than the end portions during use.

From WO 2006/096573 A2 is known another drop-center axle. From WO 2006/067551 A1 is known a transverse beam connecting two longitudinal arms of a vehicle suspension, which transverse beam is provided with a recess.

In practice such curved axle beams are used as a so-called steered leading rear axle, which is placed in front of the axle with driven wheels, viewed in the direction of travel of the vehicle. Said steered leading rear axle can be lifted by means of an axle lifting device when it is not needed, but can be lowered in the case of a heavy load, in order to prevent overloading of the driven axle. Since the centre of the axle body lies lower down than the end portions, space is created for a cardan shaft which crosses the curved axle body on the upper side.

It has been found in practice that in known applications the distance between the curved axle body and the cardan shaft is short. This means that the wheel axle and the cardan shaft can touch each other. This is a problem, particularly if it has to be possible to raise the chassis of the vehicle, with the result that the cardan shaft is brought to a more slanting position relative to the horizontal. In that case it is then generally no longer possible to lift the curved steered leading rear axle by means of an axle lifting device because the cardan shaft is obstructing a complete lifting. A solution in theory could be to place the centre of the curved axle even lower down. However, this would result in the clearance relative to the ground becoming so reduced that in use the axle could touch the ground there, which is unacceptable.

The invention aims to provide an axle body in which the abovementioned problem is at least partially overcome.

This aim is achieved according to the invention with an axle body according to claim 1.

The flattened surface of the axle body ensures that more space is created between the axle body and the cardan shaft crossing along the top of it. This makes it possible, for example, to use the axle body for a steered leading rear axle which can be placed closer to the driven axle, while the axle can also be lifted if desired, even if the chassis has been raised.

In practice, a steered leading rear axle will generally comprise a curved axle body, as stated above. However, it is also conceivable for a straight axle body to be used as the steered leading rear axle. The flattened surface according to the invention can be provided not only in a curved, but also in a straight axle body.

The flattened surface is produced by deformation, so that the cross-sectional surface area of the axle body at the position of the flattened surface is the same as the cross-sectional surface area in the remainder of the axle body. The provision of the flattened surface by means of a deformation technique, unlike a metal-removing operation, causes no substantial weakening of the axle body. The flattened surface is preferably produced by cold deformation.

The axle body preferably has, at the position of the flattened surface, in the vertical direction a diameter that is 10 - 20% less than that of the remainder of the axle body. In the case of axle beams with conventional axle diameters this amounts to a space gain of approx. 20 mm.

In a preferred embodiment the flattened surface is slanted backwards slightly. This means that the normal to the flattened surface of the axle body can be directed substantially perpendicularly relative to the cardan shaft. This ensures that sufficient distance is present between the cardan shaft and the axle body, in particular when the axle body is in a raised position.

The flattened surface can have a length, viewed in the widthwise direction of the vehicle, which substantially corresponds to the distance between the axle clamps by means of which the axle is connected to a longitudinal bearing arm of the vehicle. It has been found that the greatest stresses occur in the axle body at the transition from the flattened part to the round cross section, and not in the flattened part itself. Excessively high stresses in the axle body at those points are avoided by positioning the transitions at the point where the axle is clamped by clamping means by means of which the axle body is suspended from a bearing arm.

The invention furthermore relates to a method according to claim 7. By forming a flattened portion in the axle body according to the invention by means of cold deformation, it is ensured that the cross-sectional surface area of the axle body is not reduced, and the strength of the axle body is therefore not adversely affected by the provision of the flattened surface.

Such a flattened surface can be produced by pressing, with the result that the camber angle of the wheels to be fitted on the axle could become too great. For that reason, it is possible according to a preferred embodiment of the method according to the invention to align the axle after the provision of the flattened surface so as to reduce the camber angle. As an alternative, it is also possible to deform the axle first in order to provide a camber angle, which is subsequently reduced during the provision of the flattened surface.

The invention will be explained in greater detail below with reference to the drawing, in which:
Fig. 1a shows a side view of a suspension of a steered leading rear axle with the steered leading rear axle in a raised position;
Fig. 1b shows a side view of the suspension of Fig. 1a, with the steered leading rear axle in a travelling position;
Fig. 1c shows a side view of the suspension of Fig. 1a with a raised chassis and the steered leading rear axle in a travelling position;
Fig. 2 shows a front view of an axle body according to the invention for a steered leading rear axle for a suspension of Figs 1a - 1c;
Fig. 3 shows a front view of another axle body according to the invention;
Fig. 4 shows a view in perspective of the axle body of Fig. 3;
Fig. 5 shows a side view of a vehicle provided with a steered leading rear axle according to the invention in a raised position; and
Fig. 6 shows a side view of the vehicle of Fig. 5 with the steered leading rear axle in the travelling position.

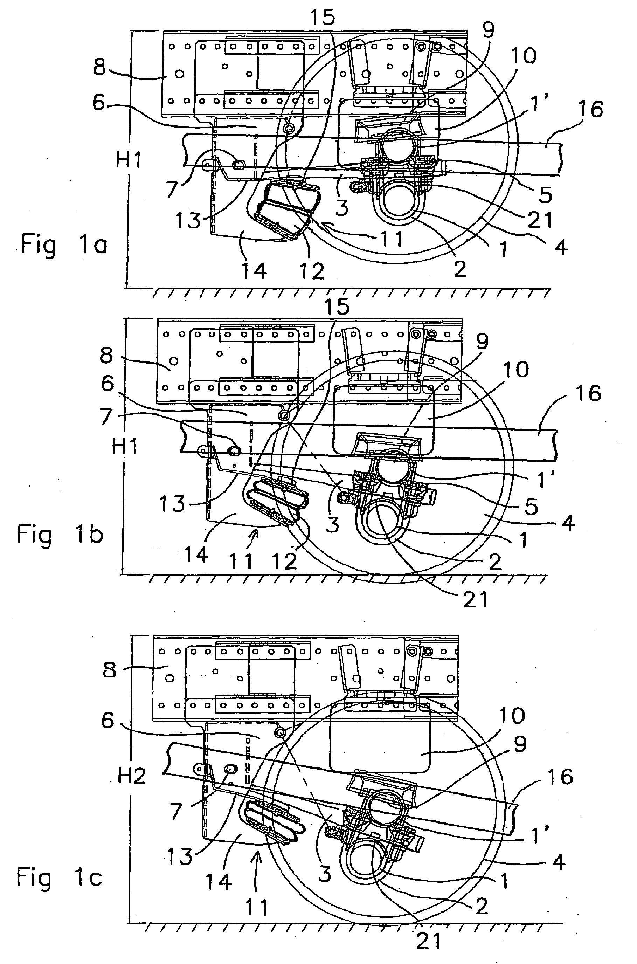

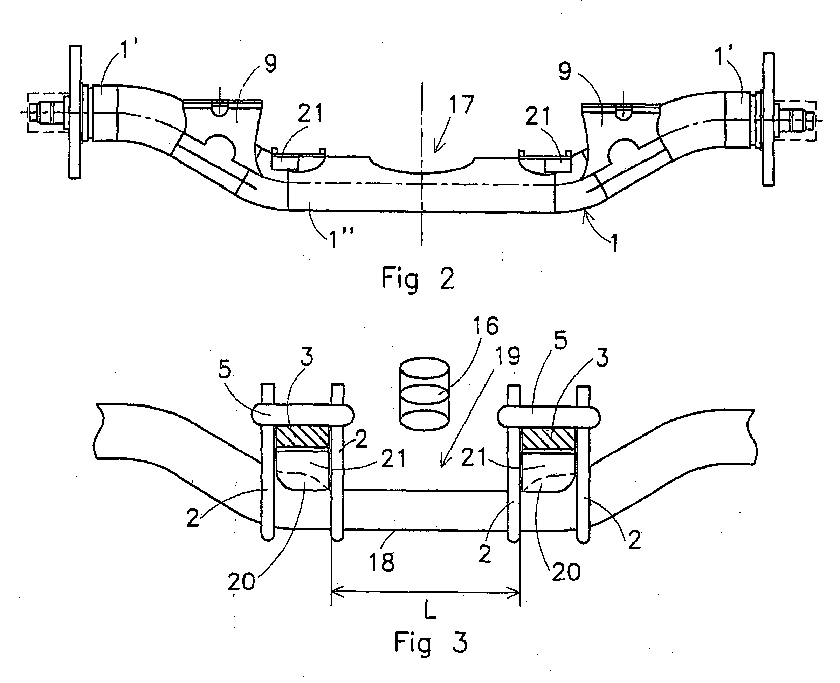

Fig. 1b shows a suspension of a steered leading rear axle, for example of a lorry, in a travelling position. The steered leading rear axle has a curved axle body 1, which is shown in Fig. 2. The axle body 1 has a substantially round cross section. The axle body 1 is clamped by means of U-bolts 2 and a clamping part 5 against a longitudinal bearing arm 3 with the interposition of a supporting part 21, also called an axle pad. The steered leading rear axle 1 has on each end an end portion 1', which bears a wheel 4 and is higher up than the intermediate portion 1" of the axle body 1, as can be seen clearly in Fig. 2. The longitudinal bearing arm 3 is in the form of a parabolic spring, which is hingedly suspended at one end by means of a hinge bolt 7 in a suspension bracket 6, also called a spring carrier arm, fixed on a chassis part 8 of the vehicle. The axle body 1 is furthermore provided with a bellows fixing part 9. The axle 1 is supported against the chassis by means of a bellows 10 (see Fig. 1b). An axle lifting device 11 is fitted on the suspension bracket 6. The axle lifting device comprises a swivel arm 13, which on the upper side is provided with a stop cushion 15, which rests against the bearing arm 3, but is not connected to the latter. Fitted below the swivel arm 13 is a gas spring bellows 12, which is connected by the upper side to the swivel arm 13 and by the lower side to a supporting arm 14.

By placing the bellows 12 under pressure, the bearing arm 3 is swung up, and the axle can be lifted to a position shown in Fig. 1a. In practice, the steered leading rear axle can be lifted if the driving axle lying behind it, viewed in the direction of travel, is not under too heavy a load. The result is that the road resistance of the vehicle is reduced. If, however, there is a threat of the driving axle being overloaded, the steered leading rear axle can be lowered, as shown in Fig. 1b.

In Fig. 1a it can be seen that in the raised position of the axle body 1 it ultimately lies very close to the cardan shaft 16 crossing along the top of it. In practice, in the case of a completely round shaft the clearance would be only a few centimetres, for example 3 to 4 centimetres.

When the chassis of the vehicle is raised from a height H1 (see Figs 1a and 1b) to a height H2, as shown in Fig. 1c, the cardan shaft 16 moves to a more slanting position, as becomes clear from a comparison of Figs 1b and 1c. In the raised position of the chassis, the steered leading rear axle, if it comprises an axle body with a substantially circular cross section over the full length, could not be lifted with the axle lifting device 11 because the axle body would then run against the cardan shaft 16.

According to the invention, a flattened surface 17 is now produced in the axle body 1 in the intermediate part 1" of said axle body on the side facing the cardan shaft 16, in order to obtain more clearance between the cardan shaft 16 and the axle body 1. The flattened surface 17 can provide a height reduction of approximately 10 - 20% relative to an axle body with a fully circular cross section, depending on the diameter of the axle. For example, in the case of an axle body 1 with a diameter of 127 mm a reduction of approximately 20 mm in the height at the position of the flattened surface 17 can be achieved. This is sufficient additional space to lift the axle body with the axle lift 11 when the chassis is in a raised position, without the cardan shaft 16 being in the way.

The flattened surface 17 is preferably produced by cold deformation. By using a deformation technique instead of a metal-removing technique, it is ensured that the cross-sectional surface area of the axle body 1 is not reduced at the position of the flattened surface 17, so that the strength and rigidity of the axle body undergoes as little adverse effect as possible. The pressing of a flattened surface 17 in the axle body 1 ensures that the upper side becomes flat, the lower side of the axle body 1 remains unchanged, and the width of the axle body increases at that point. In the example of the axle with a diameter of 127 mm the width increases to 130 mm.

During pressing of the flattened surface the camber angle of the wheels to be fitted on the axle could become too great. For that reason it is possible after production of the flattened surface to align the axle in order to reduce the camber angle. It is also possible to deform the axle first in order to produce a camber angle which is subsequently reduced during the production of the flattened surface. Furthermore, it is possible to perform a finishing operation on the end portions of the axle body that are lying in line, in order to remove inaccuracies resulting from the bending of the axle body. This means that the stub axles can be fitted on the end portions by means of a press fit.

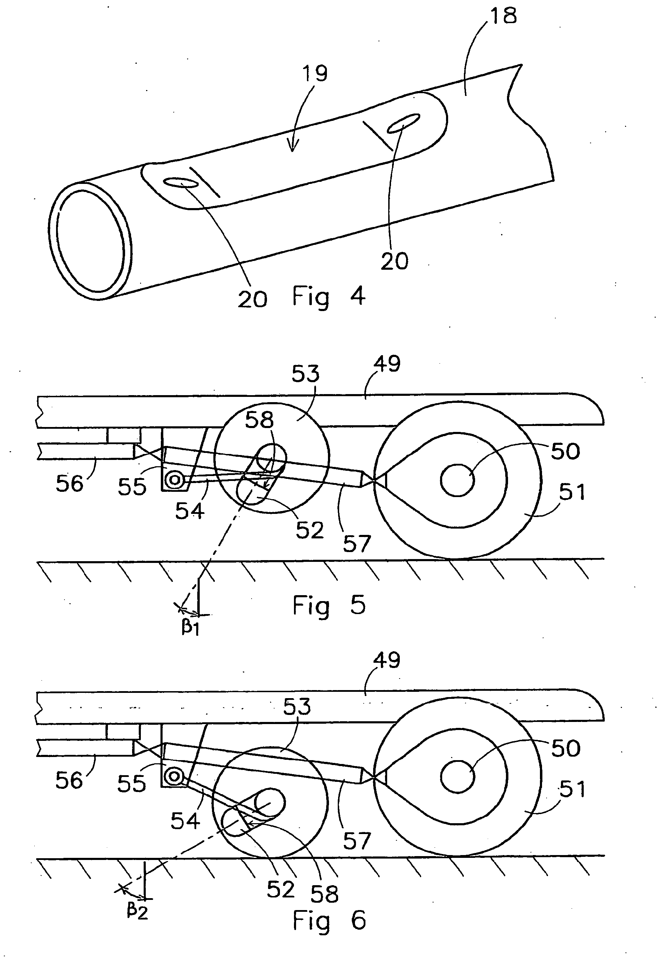

Fig. 3 and Fig. 4 show an alternative axle body 18 with a flattened surface 19, which in the longitudinal direction of the axle body, i.e. in the widthwise direction of the vehicle, has a length L which is greater than the length of the flattened surface 17 of Fig. 2. A greater flattened surface 19 is advantageous because in practice the cardan shaft 16 is usually not exactly in the centre.

The length L of the flattened surface 19 is preferably such that the transitional regions 20 from the flattened surface 19 to the normal axle diameter are accommodated in an axle clamp, as shown in Fig. 3. It has been found that the greatest stresses occur in the axle body 18 at the transitional region 20 from the flattened part 19 to the round cross section, and not in the flattened part itself. By clamping the transitions 20, it is ensured that excessive stresses in the transitional region 20 are avoided when the axle body 18 is placed under load.

Fig. 5 and Fig. 6 show a very simplified view of part of a lorry 49 with a driven axle 50 provided with wheels 51 and a steered leading rear axle 52 which is fitted in front of it and on which smaller wheels 53 are fitted. The steered leading rear axle 52 can be lifted by means of an axle lift, which is not shown in any further detail in these figures, but for an illustration reference is made to Figs 1a - 1c. The steered leading rear axle 52 is clamped on a longitudinal bearing arm 54, which is suspended hingedly on a bearing bracket 55, or spring carrier arm. The driven axle 50 is driven by a driving axle 56 by way of a cardan shaft 57 fitted between the driving axle 56 and the wheel axle 50, which cardan shaft slants down backwards from the driving axle 56 situated higher up to the transmission of the wheel axle 50 situated lower down.

The steered leading rear axle has a flattened surface 58, which is shown in the section in Figures 5 and 6. It can be seen in Figs 5 and 6 that the flattened surface 58 is produced in such a way that the normal to the flattened surface 58 is directed slanting backwards and therefore forms an angle β with the vertical. The normal to the flattened surface 58 of the axle body 52 is preferably perpendicular to the axis of the cardan shaft 57 when the axle is in the lifted position, as shown in Fig. 5. This means that the cardan shaft 57 extends parallel to the flattened surface 58 and a constant and adequate space is present between the cardan shaft 57 and the axle body 52. In the travelling position of the steered leading rear axle 52 shown in Fig. 6 the angle between the normal to the surface 58 and the axis of the cardan shaft 57 is less than 90°.

## Claims

1. Substantially round axle body (1, 18, 52) for a wheel axle of a vehicle, with end portions (1') which are each adapted for fitting a non-driven wheel (4, 53) of the vehicle, and with an intermediate portion (1 ") situated between the end portions (1'), **characterized in that** the intermediate portion (1 ") is provided in a central zone with a flattened surface (17, 19, 58) facing substantially upwards, wherein the flattened surface (17, 19, 58) has been produced by deformation of the round axle body, in such a way that the cross-sectional surface area of the axle body (1, 18, 52) at the position of the flattened surface (17, 19, 58) is the same as the cross-sectional surface area in the remainder of the axle body (1, 18, 52).

2. Axle body according to claim 1, **characterized in that** the intermediate portion (1") lies lower down than the end portions (1') during use.

3. Axle body according to one of the preceding claims, wherein the axle body, at the position of the flattened surface (17, 19, 58) in the vertical direction, has a diameter that is 10 - 20% less, preferably approximately 15% less, than that of the remainder of the axle body (1, 18, 52)

4. Axle body according to one of the preceding claims, wherein the flattened surface (58) is directed slanting slightly backwards.

5. Axle body according to one of the preceding claims, wherein the flattened surface (19) has a length, viewed in the widthwise direction of the vehicle, which substantially corresponds to the distance between the axle clamps (2, 5) by means of which the axle is connected to a longitudinal bearing arm (3) of the vehicle.

6. Method for the production of an axle body according to one of the preceding claims, wherein the flattened surface (17, 19, 52) is produced by cold deformation.

7. Method according to claim 6, wherein after the provision of the flattened surface (17, 19, 52) the axle body is aligned so as to reduce the camber angle.

8. Method according to claim 6, wherein, before the flattened surface (17, 19, 52) is formed, the axle body is deformed in order to form a camber angle, which camber angle is reduced during the provision of the flattened surface (17, 19, 52)

9. Vehicle provided with an axle body according to one of claims 1-5.

10. Vehicle with a driven axle (50) with end portions on which wheels (51) are fitted and a substantially round leading rear axle (52) with end portions on which wheels (53) are fitted that are smaller than the driven wheels (51), said leading rear axle (52) being fitted in front of the driven axle (5) by means of a pair of longitudinal bearing arms (54) which are each hingedly suspended from a bearing bracket (55) fixed on a chassis part of the vehicle, the vehicle furthermore comprising an axle lift (11) for lifting the leading rear axle (52), the driven axle (50) being driven by a cardan shaft (16, 57) which crosses the leading rear axle (52) on an upper side, wherein the leading rear axle (52) has an intermediate portion (1") situated between the end portions (1'), wherein the leading rear axle (52) has an axle body according to any one of the claims 1 - 5.

## Patentansprüche

1. Im Wesentlichen runder Achsenkörper (1, 18, 52) für eine Radachse eines Fahrzeugs, mit Endbereichen, (1'), welche jeweils zur Aufnahme eines nicht angetriebenen Rades (4, 53) des Fahrzeugs ausgelegt sind, und mit einem Zwischenbereich (1"), der zwischen den Endbereichen (1') liegt, **dadurch gekennzeichnet, dass** der Zwischenbereich (1") in einer zentralen Zone mit einer abgeflachten Oberfläche (17, 19, 58) versehen ist, die im Wesentlichen nach oben gerichtet ist, wobei die abgeflachte Oberfläche (17, 19, 58) durch Verformung des runden Achsenkörpers hergestellt wurde, derart, dass die Querschnitts- Oberfläche des Achsenkörpers (1, 18, 52) an der Position der abgeflachten Oberfläche (17, 19, 58) mit der Querschnitts- Oberfläche im Rest des Achsenkörpers (1, 18, 52) übereinkommt.

2. Achsenkörper nach Anspruch 1, **dadurch gekennzeichnet, dass** der Zwischenbereich (1') bei der Benutzung tiefer unten als die Endbereiche (1') liegt.

3. Achsenkörper nach einem der vorhergehenden Ansprüche, in welchem der Achsenkörper an der Position der abgeflachten Oberfläche (17, 19, 58) in der vertikalen Richtung einen Durchmesser hat, der 10 bis 20% geringer, vorzugsweise etwa 15% geringer als derjenige des Restes des Achsenkörpers (1, 18, 52) ist.

4. Achsenkörper nach einem der vorhergehenden Ansprüche, in welchem die abgeflachte Oberfläche (58) leicht schräg nach hinten gerichtet ist.

5. Achsenkörper nach einem der vorhergehenden Ansprüche, in welchem die abgeflachte Oberfläche (19) eine Länge hat, mit Blick in die Breitenrichtung des Fahrzeugs, welche im Wesentlichen mit dem Abstand zwischen den Achsenklammern (2,5) entspricht, durch welche die Achse mit einer Längs- Lagerarm (3) des Fahrzeugs verbunden ist.

6. Verfahren zur Herstellung eines Achsenkörpers nach einem der vorhergehenden Ansprüche, in welchem die abgeflachte Oberfläche (17, 19, 52) durch Kälteverformung hergestellt wird.

7. Verfahren nach Anspruch 6, in welchem nach dem Bereitstellen der abgeflachten Oberfläche (17, 19, 52) der Achsenkörper so ausgerichtet wird, dass der Sturzwinkel verringert wird.

8. Verfahren nach Anspruch 6, in welchem, bevor die abgeflachte Oberfläche (17, 19, 52) geformt wird, der Achsenkörper verformt wird, um einen Sturzwinkel zu bilden, wobei der Sturzwinkel während der Bereitstellung der abgeflachten Oberfläche (17, 19, 52) verringert wird.

9. Fahrzeug mit einem Achsenkörper nach einem der Ansprüche 1 bis 5.

10. Fahrzeug mit einer Antriebsachse (50) mit Endbereichen, auf welchen Räder (51) angesetzt sind, und einer im Wesentlichen runden führenden Hinterachse (52) mit Endbereichen, auf welchen Räder (53) angesetzt sind, die kleiner sind als die Antriebsräder (51), wobei die führende Hinterachse (52) vor der Antriebsachse (5) mit Hilfe eines Paars von Längs- Lagerarmen (54) angebracht ist, welche jeweils von einem Lagerbügel (55) gelenkig abgehängt sind, der auf einem Fahrwerkteil des Fahrzeugs befestigt ist, wobei das Fahrzeug einen Achsenheber (11) zum Anheben der führenden Hinterachse (52) aufweist, wobei die Antriebsachse (50) durch eine Kardanwelle (16, 57) angetrieben wird, welche die führende Hinterachse (52) auf einer oberen Seite kreuzt, wobei die führende Hinterachse (52) einen Zwischenbereich (1") aufweist, der zwischen den Endbereichen (1') liegt, wobei die führende Hinterachse (52) einen Achsenkörper nach einem der Ansprüche 1 bis 5 hat.

## Revendications

1. Corps d'essieu sensiblement rond (1, 18, 52) pour un axe de roue d'un véhicule, avec des parties d'extrémité (1') qui sont chacune adaptées pour monter une roue non motrice (4, 53) du véhicule, et avec une partie intermédiaire (1") située entre les parties d'extrémité (1'), **caractérisé en ce que** la partie intermédiaire (1") est munie, dans une zone centrale, d'une surface aplatie (17, 19, 58) dirigée sensiblement vers le haut, dans lequel la surface aplatie (17, 19, 58) a été produite par déformation du corps d'essieu rond, de telle manière que la surface de la section du corps d'essieu (1, 18, 52) à la position de la surface aplatie (17, 19, 58) est la même que la surface de la section dans le reste du corps d'essieu (1, 18, 52).

2. Corps d'essieu selon la revendication 1, **caractérisé en ce que** la partie intermédiaire (1") est plus basse que les parties d'extrémité (1') pendant l'utilisation.

3. Corps d'essieu selon l'une quelconque des revendications précédentes, dans lequel le corps d'essieu, à la position de la surface aplatie (17, 19, 58) dans la direction verticale, a un diamètre qui est 10 à 20 % inférieur, de préférence environ 15 % inférieur, à celui du reste du corps d'essieu (1, 18, 52).

4. Corps d'essieu selon l'une quelconque des revendications précédentes, dans lequel la surface aplatie (58) est dirigée en biais légèrement vers l'arrière.

5. Corps d'essieu selon l'une quelconque des revendications précédentes, dans lequel la surface aplatie (19) a une longueur, vue dans le sens de la largeur du véhicule, qui correspond sensiblement à la distance entre les brides d'essieu (2, 5) au moyen desquelles l'essieu est relié à un bras porteur longitudinal (3) du véhicule.

6. Procédé de fabrication d'un corps d'essieu selon l'une quelconque des revendications précédentes, dans lequel la surface aplatie (17, 19, 52) est produite par déformation à froid.

7. Procédé selon la revendication 6, dans lequel après la fourniture de la surface aplatie (17, 19, 52), le corps d'essieu est aligné de façon à réduire l'angle de carrossage.

8. Procédé selon la revendication 6, dans lequel avant que la surface aplatie (17, 19, 52) ne soit formée, le corps d'essieu est déformé de manière à former un angle de carrossage, lequel angle de carrossage est réduit pendant la formation de la surface aplatie (17, 19, 52).

9. Véhicule muni d'un corps d'essieu selon l'une quelconque des revendications 1 à 5.

10. Véhicule avec un essieu moteur (50) avec des parties d'extrémité sur lesquelles des roues (51) sont montées et un essieu arrière directeur sensiblement rond (52) avec des parties d'extrémité sur lesquelles des roues (53), qui sont plus petites que les roues motrices (51), sont montées, ledit essieu arrière directeur (52) étant monté devant l'essieu moteur (50) au moyen d'une paire de bras porteurs longitudinaux (54) qui sont chacun suspendus de manière articulée à partir d'un support de palier (55) fixé sur une partie de châssis du véhicule, le véhicule comprenant en outre un dispositif de levage d'essieu (11) pour lever l'essieu arrière directeur (52), l'essieu moteur (50) étant entraîné par un arbre à cardan (16, 57) qui croise l'essieu arrière directeur (52) sur un côté supérieur, dans lequel l'essieu arrière directeur (52) a une partie intermédiaire (1") située entre les parties d'extrémité (1'), dans lequel l'essieu arrière directeur (52) a un corps d'essieu selon l'une quelconque des revendications 1 à 5.
